**Europäisches Patentamt**

**European Patent Office**

**Office européen des brevets**

(19)

(11) Veröffentlichungsnummer : **0 212 110
B1**

(12) **EUROPÄISCHE PATENTSCHRIFT**

(45) Veröffentlichungstag der Patentschrift :
28.09.88

(51) Int. Cl.⁴ : **B 29 B 7/76, B 29 C 67/22**

(21) Anmeldenummer : 86107811.1

(22) Anmeldetag : 07.06.86

(54) Mischkopf zum Vermischen zumindest zweier Kunststoff bildender Komponenten.

(30) Priorität : 13.06.85 DE 3521236

(43) Veröffentlichungstag der Anmeldung :
04.03.87 Patentblatt 87/10

(45) Bekanntmachung des Hinweises auf die Patenterteilung : 28.09.88 Patentblatt 88/39

(84) Benannte Vertragsstaaten :
AT BE CH DE FR GB IT LI NL SE

(56) Entgegenhaltungen :
EP-A- 0 039 856
EP-A- 0 062 182
EP-A- 0 079 510
EP-A- 0 088 936
EP-A- 0 093 958
EP-A- 0 143 196
DE-A- 3 340 889
DE-A- 3 427 326
DE-A- 3 427 327
DE-B- 1 067 207
FR-A- 2 345 285

(73) Patentinhaber : IBW Ingenieur-Büro Woitzel GmbH
Rotdornweg 26
D-4530 Ibbenbüren1 (DE)

(72) Erfinder : Woitzel, Heinz
Rotdornweg 26
D-4530 Ibbenbüren 1 (DE)

(74) Vertreter : Busse & Busse Patentanwälte
Postfach 1226 Grosshandelsring 6
D-4500 Osnabrück (DE)

**Beschreibung**

Die Erfindung betrifft einen Mischkopf zum Vermischen zumindest zweier Kunststoff bildender Komponenten nach dem Oberbegriff des Patentanspruchs 1 (siehe EP-A-0 143 196).

Bei einem bekannten derartigen Mischkopf zum Vermischen von Kunststoff-Komponenten, die bei ihrer chemischen Reaktion vorzugsweise einen Schaumstoff, insbesondere einen Polyurethanschaum, bilden, ist das Drosselorgan von einem Drosselschieber mit einer Durchgangsbohrung gebildet, deren Durchmesser dem des Führungs- bzw. Ausstoßkanals entspricht. In der mit dem Kanal fluchtend übereinstimmenden Stellung der Durchgangsbohrung des Drosselschiebers ist eine mechanische Reinigung der Mischkammer und des Ausstoßkanals durch den Ausstoßkolben möglich, während in einer gegenüber dem Kanal quer versetzten Stellung der Durchgangsbohrung des Drosselschiebers durch Bildung einer verengten Übertrittsöffnung zwischen der Mischkammer und dem Inneren der Durchgangsbohrung eine Wirbelkammer im Bohrungsinneren gebildet ist, durch die die Vermischungsintensität der Reaktionskomponenten verbessert werden soll. Durch die Ausbildung einer solchen Wirbelkammer entstehen große Turbulenzen in dem flüssigen Komponentengemisch, die auch in dem querschnittsgleichen Ausstoßkanal nach Verlassen der Wirbelkammer keine in solchem Maße ausreichende Beruhigung erfahren, daß Fehlerstellen im Erzeugnis, insbesondere durch Lufteinschlüsse, vermieden sind.

Es ist ferner ein Mischkopf zum Erzeugen eines chemisch reaktionsfähigen Gemisches aus mindestens zwei Kunststoffkomponenten der angegebenen Art bekannt, bei dem das Drosselorgan aus mehreren in Reihe oder versetzt nebeneinander und/oder hintereinander angeordneten Staukörpern besteht, die von entgegengesetzten Seiten der Mischkammer in diese einführbar sind. Auch hierbei ist zwar eine vorteilhafte mechanische Selbstreinigung des Ausstoßkanals und der Mischkammer durch den Ausstoßkolben bei aus der Mischkammer zurückgezogenen Staukörpern gegeben, jedoch erfährt auch in diesem bekannten Fall das durch eine Vielzahl von Quetschspalten hindurchgetriebene flüssige Komponentengemisch, das mit hoher Geschwindigkeit in die Mischkammer eingespritzt wird, keinen ausreichenden Abbau der entstandenen Turbulenzen, die ursächlich für Fehler im herzustellenden Erzeugnis, insbesondere einem Formteil, sind.

Der Erfindung liegt die Aufgabe zugrunde, einen Mischkopf zum Vermischen zumindest zweier Kunststoff bildender Komponenten der eingangs angegebenen Art zu schaffen, bei dem unter Erhalt der mechanischen Selbstreinigung von Ausstoßkanal und Mischkammer durch den Ausstoßkolben und einer intensiven Vermischung der Reaktionskomponenten eine Beruhigung des flüssigen Komponentengemisches nach dem Verlassen der Mischkammer in einem solchen Maße erreichbar ist, daß Fehler im herzustellenden Erzeugnis aufgrund von Mischungsturbulenzen weitestgehend vermieden sind.

Diese Aufgabe wird nach der Erfindung durch eine Ausgestaltung des Mischkopfes entsprechend dem Patentanspruch 1 gelöst. Bei dieser Ausgestaltung bildet das Drosselorgan am Austrittsende der Mischkammer einen sich über den Querschnitt des Austrittskanals hinweg erstreckenden, durch einen Staueffekt die Mischungsintensität verbessernden Drosselspalt, der sich zur Austrittsöffnung des Austrittskanals hin diffusorartig erweitert, um auf diese Weise innerhalb des Mischkopfes unter Ausnutzung des bekannten Diffusoreffektes eine so weitgehende Beruhigung des flüssigen Komponentengemisches, d. h. eine Umwandlung der turbulenten Strömung in eine im wesentlichen laminare Strömung, zu erreichen, daß Fehler im Erzeugnis, die sonst durch verbleibende Turbulenzen erzeugt werden, weitestgehend vermieden sind.

Zahlreiche weitere Merkmale und Vorteile der Erfindug ergeben sich aus den Unteransprüchen und der nachstehenden Beschreibung in Verbindung mit der Zeichnung, in der mehrere Ausführungsbeispiele des Gegenstands der Erfindung schematisch veranschaulicht sind. In der Zeichnung zeigen :

Fig. 1 einen Längsschnitt durch ein erstes Ausführungsbeispiel eines Mischkopfes in Mischstellung des Ausstoßkolbens und des Drosselorgans,

Fig. 2 einen Schnitt nach der Linie II-II der Fig. 1,

Fig. 3 einen Schnitt nach der Linie III-III der Fig. 1,

Fig. 4 eine Darstellung entsprechend Fig. 1, wobei sich jedoch der Ausstoßkolben und das Drosselorgan in ihrer Reinigungsstellung befinden,

Fig. 5 einen Längsschnitt durch ein weiteres Ausführungsbeispiel eines Mischkopfes in Mischstellung des Ausstoßkolbens und des Drosselorgans,

Fig. 6 einen Schnitt nach der Linie VI-VI der Fig. 5,

Fig. 7 einen Schnitt nach der Linie VII-VII der Fig. 5,

Fig. 8 eine Darstellung entsprechend Fig. 5, wobei sich jedoch der Ausstoßkolben und das Drosselorgan in ihrer Reinigungsstellung befinden,

Fig. 9 eine Schnitt nach der Linie IX-IX der Fig. 8,

Fig. 10 einen Längsschnitt durch ein weiteres Ausführungsbeispiel eines Mischkopfes in Mischstellung des Ausstoßkolbens und des Drosselorgans,

Fig. 11 einen Schnitt nach der Linie XI-XI der Fig. 10,

Fig. 12 einen Schnitt nach der Linie XII-XII der Fig. 10,

Fig. 13 eine Darstellung entsprechend Fig. 10, wobei sich jedoch der Ausstoßkolben und das Drosselorgan in ihrer Reinigungsstellung befinden,

Fig. 14 noch ein weiteres Ausführungsbeispiel eines Mischkopfes im Längsschnitt in Mischstellung des Ausstoßkolbens und des Drosselorgans,

Fig. 15 einen Schnitt nach der Linie XV-XV der Fig. 14,

Fig. 16 einen Schnitt nach der Linie XVI-XVI der Fig. 14 und

Fig. 17 eine Darstellung entsprechend Fig. 14, wobei sich jedoch der Ausstoßkolben und das Drosselorgan in ihrer Reinigungsstellung befinden, und

Fig. 18 u. 19 je ein weiteres Ausführungsbeispiel eines Mischkopfes in Darstellungen entsprechend den Fig. 7 und 14.

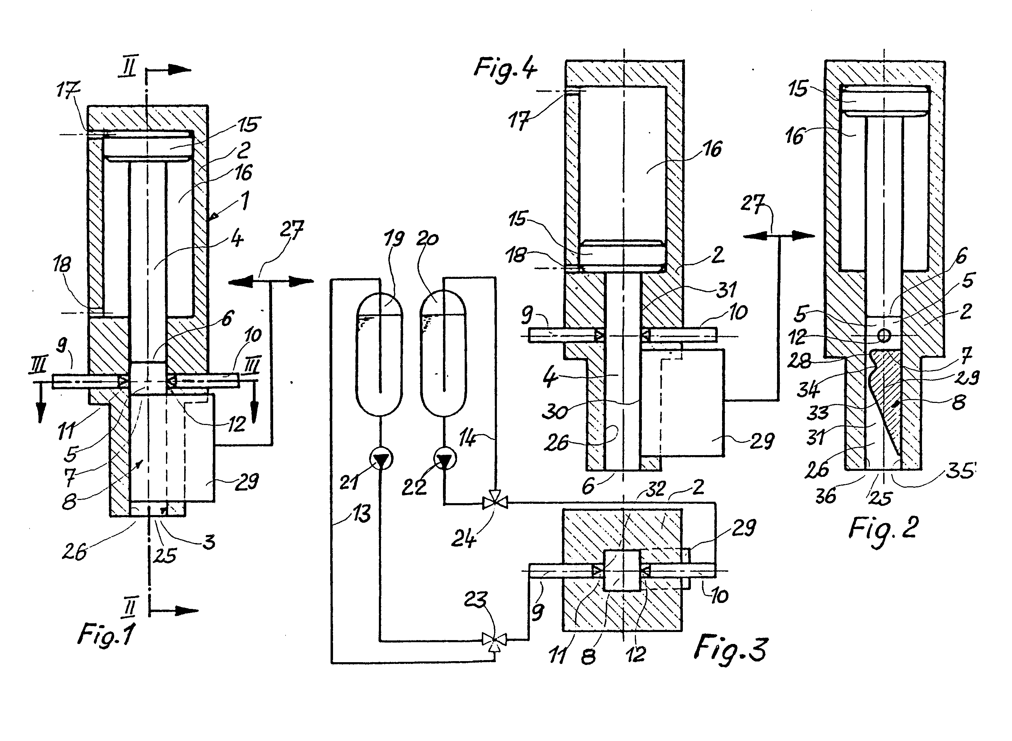

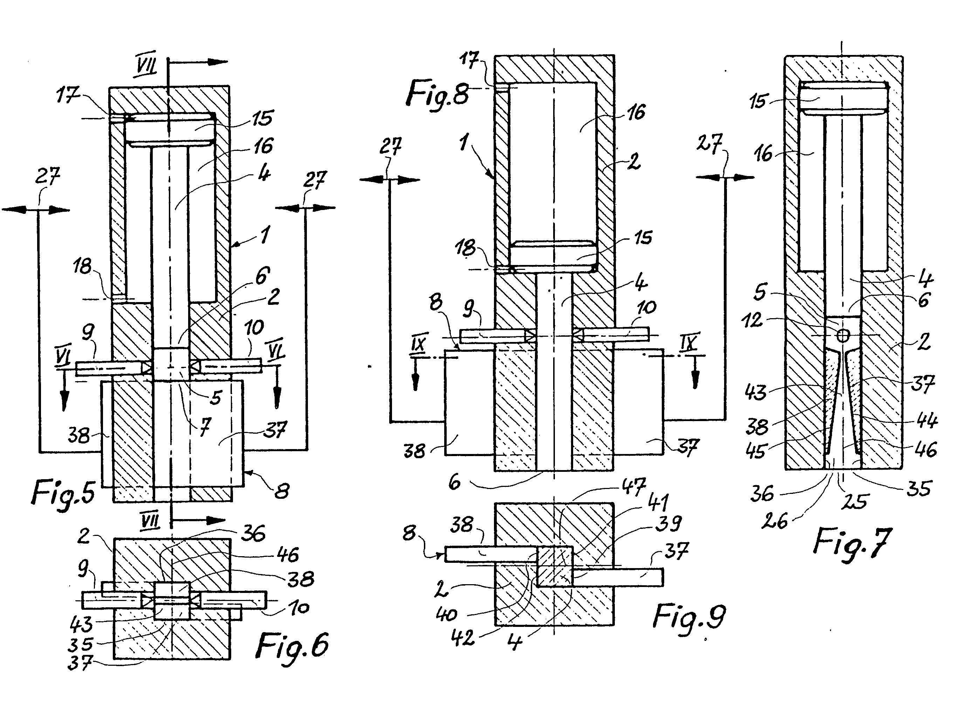

In der Zeichnung ist ein als Ganzes mit 1 bezeichneter Mischkopf zum Vermischen zumindest zweier Kunststoffkomponenten gezeigt, die bei ihrer Reaktion z. B. einen Schaumstoff, insbesondere einen Polyurethanschaum, bilden. Der Mischkopf 1 besteht aus einem Gehäuse 2 mit einer Führungsbohrung 3, in der ein Ausstoßkolben 4 hin- und herverschieblich geführt ist. Ein Bereich der Führungsbohrung 3 bildet eine Mischkammer 5, die in der beispielsweise in Fig. 1 gezeigten zurückgefahrenen Stellung des Ausstoßkolbens 4 von dessen freier Stirnseite 6 einenends begrenzt ist. Das andere Ende der Mischkammer 5 ist von der der Stirnfläche 6 des Ausstoßkolbens 4 gegenüberliegenden Seite 7 eines Drosselorgans 8 begrenzt. Von Komponentenzuleitungen 9 und 10 münden Einlaßöffnungen 11 und 12 in die Mischkammer 5 ein. Rücklaufleitungen sind mit 13 und 14 bezeichnet (Fig. 3). An seinem von der Mischkammer 5 abgewandten Ende ist der Ausstoßkolben 4 als beidseitig beaufschlagbarer Hydraulikkolben 15 ausgebildet, der in einem Zylinder 16 mit entsprechenden Leitungsanschlüssen 17 und 18 geführt ist.

In Fig. 3 sind ferner Vorratsbehälter 19 und 20 für die beiden Reaktionskomponenten dargestellt, von denen die Komponenten jeweils mittels einer Dosierpumpe 21, 22 über die Zuleitungen 9, 10 in die Mischkammer 5 nach dem Gegenstrominjektionsprinzip mit hoher Geschwindigkeit eingespritz werden, um hier das Reaktionsgemisch zu bilden. Bei Ablauf der Injektionszeit werden Wegeventile 23, 24 auf die Rücklaufleitungen 13 und 14 umgeschaltet, so daß die von den Vorratsbehältern 19, 20 geförderten Komponenten im Kreislauf geführt werden. Zur Durchführung dieses Arbeitsspiels kann der Mischkopf in an sich bekannter Weise düsen-, druck- oder kolbengesteuert sein.

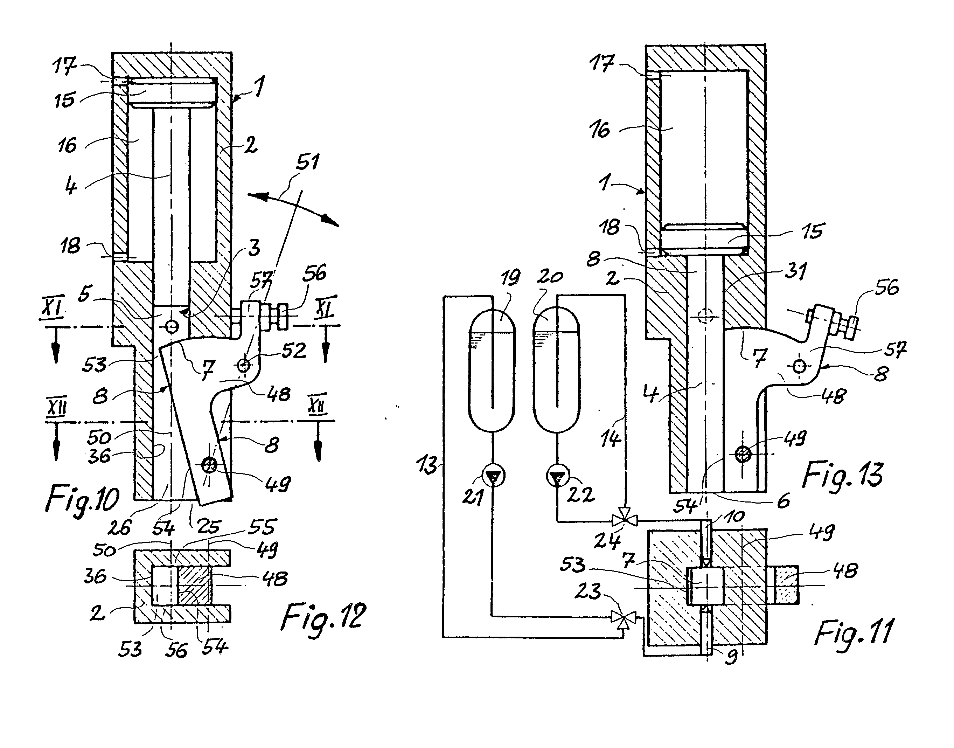

Der Führungskanal 3 weist einen rechteckigen Querschnitt auf, wobei bei dem Ausführungsbeispiel nach den Fig. 1 bis 4 eine der vier Rechteckseiten des freien Kanalquerschnitts teilweise von dem Drosselorgan 8 eingenommen ist, das sich in seiner Länge von der Mischkammer 5 im wesentlichen bis zur Austrittsöffnung 25 des in diesem Bereich einen Ausstoßkanal 26 bildenden Führungskanals 3 erstreckt. Das Drosselorgan 8 ist dabei zwischen einer den rechteckigen bzw. bei den dargestellten Beispielen quadratischen Kanalquerschnitt freigebenden, zurückbewegten Stellung, wie sie in Fig. 4 gezeigt ist, und einer in den Kanalquerschnitt eingreifenden Drosselstellung, wie sie die Fig. 1, 3 und 4 zeigen, hin- und herbewegbar. Diese Hin- und Herbeweglichkeit des Drosselorgans 8 ist in der Zeichnung durch Doppelpfeile 27 kenntlich gemacht.

In der Drosselstellung, die der Mischstellung des Drosselorgans 8 und des Ausstoßkolbens 4 entspricht, bildet das Drosselorgan 8 am strömungsabwärts gelegenen Ende der Mischkammer 5 einen Drosselspalt 28, wie er bei dem vorstehend beschriebenen Ausführungsbeispiel aus Fig. 2 ersichtlich ist. Der Drosselspalt 28 erstreckt sich quer durch den gesamten Kanalquerschnitt und erweitert sich zur Austrittsöffnung 25 hin nach Art eines Diffusors.

Das Drosselorgan 8 ist bei dem Ausführungsbeispiel nach den Fig. 1 bis 4 von einer Wandplatte 29 des Gehäuses 2 gebildet, deren in der zurückbewegten, den Kanalquerschnitt freigebenden Stellung dem Ausstoßkanal 26 zugewandte Stirnfläche 30 in einer mit der angrenzenden Wandfläche 31 des Kanals 26 gemeinsamen Ebene angeordnet ist und die rechteckige Querschnittsbegrenzung des Ausstoßkanals 26 vervollständigt. In dieser Stellung erfolgt das Ausstoßen des Komponentengemisches für die mechanische Selbstreinigung des Ausstoßkanals 26 und der Mischkammer 5 durch den Ausstoßkolben 4, wie es aus Fig. 4 ersichtlich ist.

Zur Herstellung der Drosselstellung wird die Wandplatte 29 mit ihrer Stirnseite 32 bis zur Anlage an die gegenüberliegende Seite des Kanalquerschnitts in den Ausstoßkanal 26 eingeschoben. Der freie Kanalquerschnitt ist sodann von der Wandfläche 33 der Wandplatte 29 reduziert, wobei sich allerdings die Wandfläche 33 zur Ausbildung der diffusorartigen Erweiterung des Drosselspaltes 28 zur Austrittsöffnung 25 des Ausstoßkanals 26 hin verjüngt. Diese stetige Verjüngung der Wandfläche 33 ist durch eine Profilierung 34 im unmittelbar an die Mischkammer 5 anschließenden Bereich unterbrochen. Auf diese Weise ist eine an besondere Strömungserfordernisse angepaßte Konturierung der Drosselspaltfläche 33 erreicht.

Senkrecht zur Längsachse des Ausstoßkanals 26 und parallel zu der Rechteckseite 35 des Kanalquerschnitts, an der sie in Drosselstellung gegenüber ihrer Wandfläche 33 anliegt, ist die Wandplatte 29 in einer querschnittsgleichen Aufnahmeöffnung des Gehäuses 2 verschieblich abgestützt. Auf diese Weise erfolgt auch beim Zurückziehen der Wandplatte 29 aus dem Kanalquerschnitt eine Selbstreinigung der Wandplatte 29.

Bei dem Ausführungsbeispiel nach den Fig. 5 bis 9 ist das Drosselorgan 8 von zwei einander gegenüberliegenden Seiten 35, 36 des Kanalquerschnitts zugeordneten Wandplatten 37 und 38 gebildet, deren in der zurückbewegten, den Kanalquerschnitt freigebenden Stellung dem Ausstoßkanal 26 zugewandte Stirnflächen 39 und 40 in einer mit der angrenzenden Wandfläche 41, 42 des Kanals gemeinsamen Ebene angeordnet sind und die rechteckige Querschnittsbegrenzung des Kanals 26 an den beiden einander gegenüberliegenden Rechteckseiten bzw. Wandflächen 41, 42 des Kanalquerschnitts vervollständigen. In dieser Stellung erfolgt der Ausstoßhub des Ausstoßkolbens 4, wie es aus den Fig. 8 und 9 ersichtlich ist. Auch in diesem Fall sind die beiden Wandplatten 37 und 38 jeweils in einer querschnittsgleichen Aufnahmeöffnung des Gehäuses 2 gegenläufig verschieblich geführt, so daß auch die Wandplatten 37 und 38 bei ihrer Zurückbewegung aus dem Kanalquerschnitt eine mechanische Selbstreinigung bei ihrer Parallelverschiebung erfahren.

Während bei dem Ausführungsbeispiel nach den Fig. 1 bis 4 der sich diffusorartig erweiternde Drosselspalt 28 von der Wandfläche 33 des Drosselorgans 8 und der dieser gegenüberliegenden Wandfläche 36 des Ausstoßkanals 26 gebildet ist, sieht das Ausführungsbeispiel nach den Fig. 5 bis 9 einen sich diffusorartig erweiternden Drosselspalt 43 vor, der von den einander gegenüberliegenden Wandflächen 44 und 45 der beiden Wandplatten 37 und 38 begrenzt ist. Beidseits einer mittleren Symmetrielängsebene 46 des Austrittskanals 26 weisen dabei die beiden Wandplatten 37, 38 von keilförmiger Querschnittsgrundgestalt eine spiegelbildliche Anordnung auf, während die größte Breite der Wandplatten 37, 38, gemessen quer zu ihrer Verschieberichtung (Pfeil 27), kleiner als die Länge der in Meßrichtung verlaufenden Rechteckseite 41 bzw. 42 des Kanalquerschnitts ist. Die Wandplatten 37, 38 sind dabei beidseits einer senkrecht zur Ebene 46 stehenden mittleren Längsebene 47 mit gegenseitigem Abstand zur Ausbildung des Drosselspalts 43 angeordnet und liegen in Drosselstellung mit ihren den Spaltbegrenzungsflächen 44, 45 gegenüberliegenden Flächen an den Rechteckseiten 35, 36 des Kanalquerschnitts an.

Bei dem Ausführungsbeispiel nach den Fig. 10 bis 13 ist das Drosselorgan 8 von einer Wandplatte 48 gebildet, die um eine Achse 49 schwenkbar im Gehäuse 2 abgestützt ist. Die Achse 49 verläuft senkrecht zur Längserstreckung des Führungskanals 3 in einer zu dessen Längsmittelebene 50 parallelen Ebene. Die Wandplatte 48 ist um ihre Schwenkachse 49 in Richtung des Doppelpfeils 51 zwischen einer in den Kanalquerschnitt eingreifenden Drosselstellung (Fig. 10) und einer den Kanalquerschnitt freigebenden, zurückbewegten Stellung (Fig. 13) hin- und herschwenkbar. Die Verschwenkung der Wandplatte 48 kann mittels einer geeigneten Betätigungsvorrichtung, z. B. mittels eines druckmittelbetätigten Arbeitszylinders, der bei 52 an die Wandplatte 49 angelenkt wird, durchgeführt werden.

In der aus den Fig. 10, 11 und 12 ersichtlichen einwärts verschwenkten Drosselstellung bildet die Wandplatte 49 einen Drosselspalt 53 am strömungsabwärts gelegenen Ende der Mischkammer 5, der sich wiederum zur Austrittsöffnung 25 hin diffusorartig erweitert. Die Breite der Wandplatte 48, gemessen quer zu ihrer Verschwenkrichtung 51, ist dabei gleich der Länge einer Rechteckseite des Kanalquerschnitts, wie dies insbesondere aus den Fig. 11 und 12 ersichtlich ist. Der Drosselspalt 53 wird bei dieser Ausgestaltung zwischen der beim Einschwenken vorauslaufenden Stirnfläche 54 und der dieser gegenüberliegenden Wandfläche 36 des Kanalquerschnitts ausgebildet.

Zur Ausbildung des Drosselspalts 53 wird die Wandplatte 48 in Verschwenkrichtung 51 jeweils um ein Maß in den Kanalquerschnitt eingeschwenkt, das kleiner als die Länge der parallel zur Verschwenkrichtung 51 verlaufenden Rechteckseiten 55, 56 des Kanalquerschnitts ist. Es wird somit stets am strömungsabwärts gelegenen Ende der Mischkammer 5 von der angrenzenden Oberfläche 7 der Wandplatte 48 bzw. ihrer Stirnfläche 54 der Drosselspalt 53 mit der gegenüberliegenden Wandfläche 36 des Ausstoßkanals 26 gebildet. Die in Schwenkrichtung 51 gemessene Weite des Drosselspalts 51 kann dabei zur Erzielung verschiedener Drosselwiderstände mittels einer Anschlagschraube 56 eingestellt werden, die in einen über die Wandfläche 47 vorstehenden äußeren Ansatz 57 der Wandplatte 48 eingeschraubt ist und mit ihrem gehäuseseitigen, aus dem Ansatz 57 herausragenden Stirnende beim Einwärtsschwenken der Wandplatte 48 am Gehäuse 2 zur Anlage kommt. Ferner kann der Abstand der Schwenkachse 49 von der Mischkammer 5 zur Einstellung unterschiedlicher Diffusoröffnungswinkel durch entsprechend unterschiedliche Lagerstellen für die Drehachse 49 veränderbar sein.

Die Fig. 13 zeigt die Wandplatte 48 in der aus dem Kanalquerschnitt herausbewegten Stellung, in der ihre Wandfläche 54 mit der zum Hydraulikkolben 15 hin angrenzenden Wandfläche 31 des Kanals fluchtend übereinstimmt, so daß der Ausstoßkolben 8 seinen Ausstoß- und Reinigungshub ausführen kann. Auch die Wandplatte 48 ist in einer querschnittsgleichen Aufnahme des Gehäuses 2 geführt, so daß sie ihrerseits bei ihrer Zurückbewegung in die in Fig. 13 veranschaulichte Stellung eine mechanische Selbstreinigung erfährt.

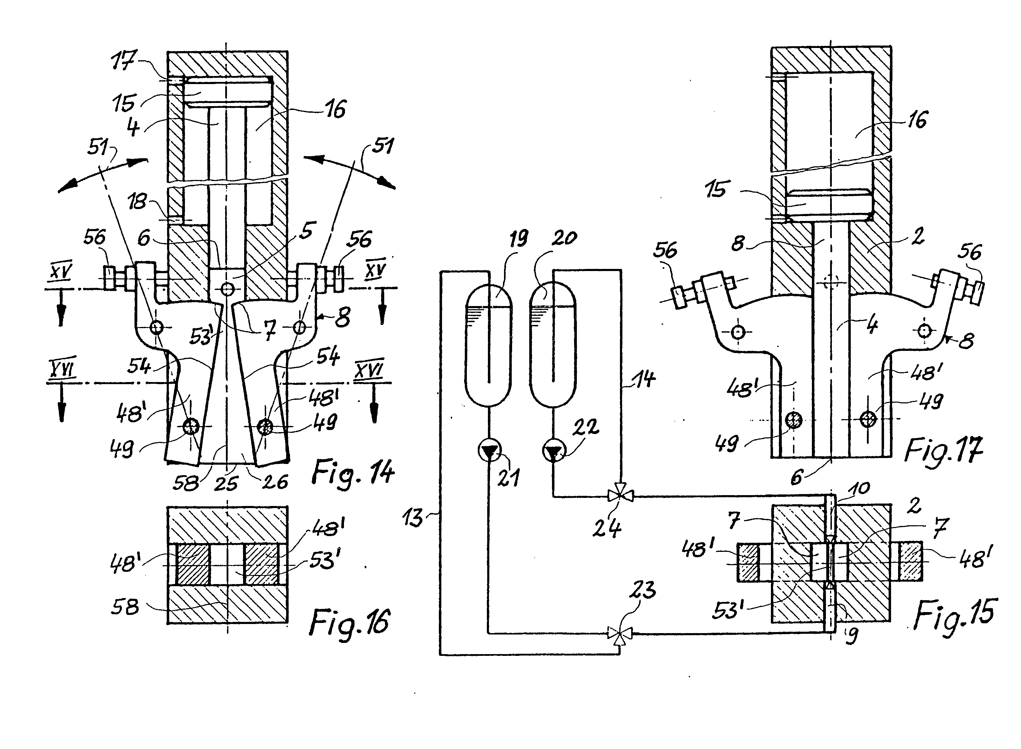

Das Ausführungsbeispiel nach den Fig. 14 bis 17 unterscheidet sich von dem nach den Fig. 10 bis 13 dadurch, daß anstelle der Wandplatte 48 zur Ausbildung des Drosselorgans 8 zwei einander gegenüberliegende Wandplatten 48' vorgesehen sind, die jeweils die gleiche Ausbildung wie die Wandplatte 48 aufweisen. Die Wandplatten 48' besitzen eine spiegelbildliche Anordnung beidseits der mittleren Symmetrielängsebene 58 des Ausstoßkanals 26 und sind gegenläufig in Pfeilrichtung 51 in den Ausstoßkanal 26 ein- und aus diesem herausschwenkbar um ihre Achsen 49 im Gehäuse 2 abgestützt.

In der aus den Fig. 14, 15 und 16 ersichtlichen einwärts geschwenkten Drosselstellung bilden die Wandplatten 48' mit ihren einander zugewandten Stirnflächen 54 zwischen sich den Drosselspalt 53' aus, der sich zum Ausstoßende 25 des Ausstoßkanals 26 hin wie der Drosselspalt 53 diffusorartig erweitert. Während jedoch beim Drosselspalt 53 des Ausführungsbeispiels nach den Fig. 10 bis 13, ebenso wie beim Drosselspalt 28 des Ausführungsbeispiels nach den Fig. 1 bis 4, der Drosselquerschnitt nur in etwa einem halben Diffusor entspricht, entspricht der Drosselspalt 53' des Ausführungsbeispiels nach den Fig. 14 bis 17, ebenso wie der Drosselspalt 43 des Ausführungsbeispiels nach den Fig. 5 bis 7, in seinem Querschnitt einem vollständigen Diffusor aufgrund der beidseitigen stetigen Erweiterung des Drosselspaltes durch die einander gegenüberliegenden Wandflächen des Drosselorgans 8.

Die Fig. 17 zeigt die beiden Wandplatten 48' in ihrer aus dem Kanalquerschnitt herausgeschwenkten Stellung, in der analog dem Ausführungsbeispiel nach den Fig. 10 bis 13 der Ausstoß- und Reinigungshub des in dem querschnittsgleichen Führungskanal 3 geführten Ausstoßkolbens 4 erfolgt.

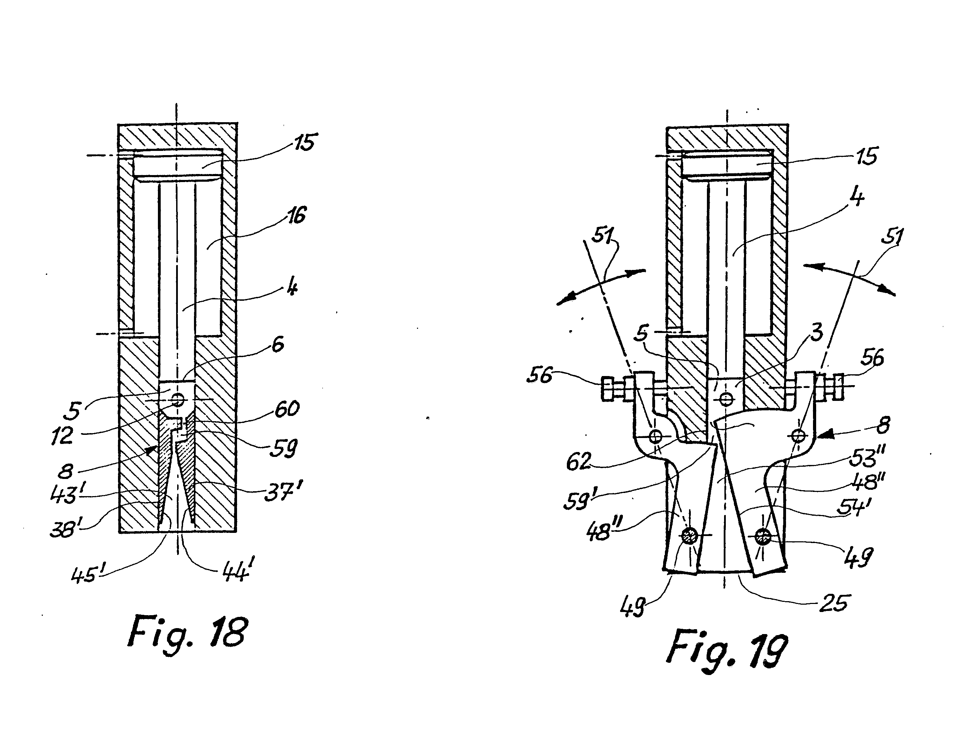

Im übrigen gelten die zu der Wandplatte 48 des Ausführungsbeispiels nach den Fig. 10 bis 13 gemachten weiteren Angaben auch entsprechend für die Wandplatten 48' des Ausführungsbeispiels nach den Fig. 14 bis 17, in denen für gleiche bzw. entsprechende Teile unter Verzicht auf eine nochmalige Beschreibung die gleichen Bezugszeichen wie in den voraufgegangenen Ausführungsbeispielen verwendet werden. Dies gilt im übrigen für sämtliche Ausführungsbeispiele des dargestellten und beschriebenen Mischkopfes und insbesondere auch für die nachfolgend noch beschriebenen weiteren Ausführungsformen gemäß den Fig. 18 und 19.

In den Fig. 18 und 19 sind Ausführungsformen des Mischkopfes beschrieben, bei denen die einander gegenüberliegenden Wandflächen 44', 45' (Fig. 18) und 54' (Fig. 19) der beiden das Drosselorgan 8 bildenden Wandplatten 37', 38' (Fig. 18) und 48'' (Fig. 19) in ihrer Drosselstellung zwischen dem sich diffusorartig erweiternden Drosselspalt 43' bzw. 53'' und der Mischkammer 5 eine Nachmischkammer 59 (Fig. 18) bzw. 59' (Fig. 19) bilden. Durch die Nachmischkammer 59 bzw. 59' im unmittelbaren Anschluß an die Mischkammer 5 kann die intensive Vermischung der Reaktionskomponenten weiter verbessert werden, wie es in ähnlicher Weise auch für die Ausführungsform gemäß Fig. 2 zutrifft, bei der durch die Profilierung 34 in Form einer kammerartigen Vertiefung in der Wandfläche 33 der das Drosselorgan bildenden Wandplatte 29 ebenfalls eine Art Nachmischkammer gebildet ist, an die sich der Diffusorteil des Drosselspaltes 28 anschließt.

Die Mischkammer 5 und die Nachmischkammer 59 bzw. 59' stehen durch einen Verbindungsspalt 60 bzw. 61 miteinander in Strömungsverbindung.

Die Nachmischkammer kann durch eine Profilformung zumindest einer der einander gegenüberliegenden Wandflächen 44', 45' der beiden Wandplatten 37', 38' gebildet sein. Dabei kann eine der Wandflächen 44', 45' durchgehend geradlinig ausgebildet sein, während die andere Wandfläche sodann eine eine kammerartige Vertiefung bildende Profilformung aufweist. Bei dem in Fig. 18 dargestellten Ausführungsbeispiel besitzen die einander gegenüberliegenden Wandflächen 44', 45' beider Wandplatten 37', 38' eine Profilformung und bilden so gemeinsam die Nachmischkammer 59 im Anschluß an den engen Verbindungsspalt 60 zur Mischkammer 5. Der sich diffusorartig erweiternde Drosselspalt 43' schließt sich unmittelbar an die Nachmischkammer 59 an.

Bei dem Ausführungsbeispiel gemäß Fig. 19 besitzen die beiden das Drosselorgan 8 bildenden Wandplatten 48'' eine ungleiche Höhe in Längsrichtung des Führungskanals 4. Die Nachmischkammer 59' ist dabei von den Stirnflächen 54' der höheren Wandplatte 48'' mit der gegenüberliegenden Kanalwand 62 des Führungskanals 3 in dem Bereich gebildet, in dem die höhere Wandplatte 48'' die niedrigere Wandplatte 48'' überragt. Unmittelbar an die Nachmischkammer 59' schließt sich der diffusorartig erweiterte Drosselspalt 53'' an, der sich wie bei sämtlichen Ausführungsbeispielen bis zur Austrittsöffnung 25 erstreckt.

Es versteht sich, daß der Mischkopf bei sämtlichen Ausführungsformen sowohl für kontinuierliche Produktionsabläufe als auch intermittierend zur Herstellung von Formteilen eingesetzt werden kann. Der Ausstoßkolben 4 wird dabei stets dann in seine Reinigungsstellung gemäß den Fig. 4, 8, 13, 17 gebracht, wenn ein Arbeitszyklus mit gegebenen Mischungskomponenten beendet ist. Die Einlaßöffnungen 11 und 12 für die Mischungskomponenten münden stets oberhalb der Eintrittsebene des Drosselspalts 28, 43, 53, 53' bzw. des Verbindungsspalts 60, 61 in die Mischkammer 5 ein. Entsprechend der zeichnerischen Darstellung münden die Einlaßöffnungen 11 und 12 stets aus einander gegenüberliegenden Wänden des Führungskanals in die Mischkammer 5 ein, so daß die Mischungskomponenten nach dem Gegenstrominjektionsprinzip in die Mischkammer 5 eingespritzt werden. Es versteht sich jedoch, daß die Eintrittsöffnungen 11 und 12 auch so in der Kanalwand des Führungskanals 3 angeordnet sein können, daß die austretenden Mischungskomponentenstrahlen in einem Winkel gegeneinander gerichtet sind.

**Patentansprüche**

1. Mischkopf zum Vermischen zumindest zweier Kunststoff bildender Komponenten, bestehend aus einem Gehäuse (2) mit einem einen querschnittsgleichen Ausstoßkolben (4) hin- und hergehbar aufnehmenden Führungskanal (3), der bereichsweise als Mischkammer (5) mit Eintrittsöffnungen (11, 12) für die Komponenten ausgebildet ist, die in der zurückgefahrenen Stellung des Ausstoßkolbens einenends von dessen freier Stirnseite (6) und anderenends von einem Drosselorgan (8) begrenzt ist, das im Bereich zwischen der Mischkammer und der gehäuseseitigen Austrittsöffnung (9, 10) für das Komponentengemisch in bezug auf den in diesem Bereich einen Ausstoßkanal für das Gemisch bildenden Führungskanal querbeweglich im Mischkopfgehäuse abgestützt ist, dadurch gekennzeichnet, daß der Führungskanal (3) einen rechteckigen Querschnitt aufweist und zumindest eine der vier Rechteckseiten des freien Kanalquerschnitts zumindest teilweise von dem Drosselorgan (8) eingenommen ist, das sich in seiner Länge von der Mischkammer (5) bis im wesentlichen zur Austrittsöffnung (25) des Austrittskanals (26) erstreckt sowie zwischen einer den Kanalquerschnitt freigebenden, zurückbewegten Stellung und einer in den Kanalquerschnitt eingreifenden Drosselstellung hin- und herbewegbar ist, und daß das Drosselorgan (8) in seiner Drosselstellung am strömungsabwärts gelegenen Ende der Mischkammer (5) einen den Austrittskanal (26) querenden Drosselspalt (28; 43; 53; 53') bildet, der sich zur Austrittsöffnung (25) hin diffusorartig erweitert.

2. Mischkopf nach Anspruch 1, dadurch gekennzeichnet, daß das Drosselorgan (8) in seiner Drosselstellung eine den freien Kanalquerschnitt teilweise begrenzende und diesen reduzierende Wandfläche (33; 44, 45; 54) parallel zu einer Rechteckseite (35, 36) des Kanalquerschnitts darbietet, die sich zur Austrittsöffnung (25) hin verjüngt.

3. Mischkopf nach Anspruch 2, dadurch gekennzeichnet, daß die in Drosselstellung den Kanalquerschnitt teilweise begrenzende Wandfläche (33) des Drosselorgans (8) eine ihre stetige Verjüngung zur Austrittsöffnung (25) hin bereichsweise unterbrechende Profilierung (34) aufweist.

4. Mischkopf nach einem der Ansprüche 1 bis 3, dadurch gekennzeichnet, daß das Drosselorgan (8) von einer Wandplatte (29) des Gehäuses (2) gebildet ist, deren in der zurückbewegten, den Kanalquerschnitt freigebenden Stellung dem Ausstoßkanal (26) zugewandte Stirnfläche (30) in einer mit der angrenzenden Wandfläche (31) des Ausstoßkanals (26) gemeinsamen Ebene angeordnet ist und die rechteckige Querschnittsbegrenzung des Ausstoßkanals (26) vervollständigt.

5. Mischkopf nach einem der Ansprüche 1 bis 3, dadurch gekennzeichnet, daß das Drosselorgan (8) von zwei einander gegenüberliegenden Seiten (35, 36) des Kanalquerschnitts zugeordneten Wandplatten (37, 38) gebildet ist, deren in der zurückbewegten, den Kanalquerschnitt freigebenden Stellung dem Ausstoßkanal (26) zugewandte Stirnflächen (39, 40) in einer mit der angrenzenden Wandfläche (40, 41) des Kanals (26) gemeinsamen Ebene angeordnet sind und die rechteckige Querschnittsbegrenzung des Kanals (26) an zwei einander gegenüberliegenden Rechteckseiten des Kanalquerschnitts vervollständigen.

6. Mischkopf nach einem der Ansprüche 1 bis 4, dadurch gekennzeichnet, daß der sich diffusorartig erweiternde Drosselspalt (28; 53) von der den Kanalquerschnitt entlang einer Seite des Querschnittsrechtecks einnehmenden Wandfläche (33; 54) des Drosselorgans (8) und der dieser gegenüberliegenden Wandfläche (36) des Ausstoßkanals (26) gebildet ist.

7. Mischkopf nach einem der Ansprüche 1 bis 5, dadurch gekennzeichnet, daß der sich diffusorartig erweiternde Drosselspalt (43; 53') von einander gegenüberliegenden Wandflächen (44, 45; 54) der beiden das Drosselorgan (8) bildenden Wandplatten (37, 38; 48') begrenzt ist.

8. Mischkopf nach einem der Ansprüche 4 bis 7, dadurch gekennzeichnet, daß die oder jede Wandplatte (29; 37, 38; 48; 48') des Drosselorgans (8) in einer querschnittsgleichen Aufnahmeöffnung des Gehäuses (2) geführt ist.

9. Mischkopf nach Anspruch 5 oder 7, dadurch gekennzeichnet, daß die beiden Wandplatten (37, 38; 48') des Drosselorgans (8) eine spiegelbildliche Querschnittsanordnung beidseits einer mittleren Symmetrielängsebene (46; 58) des Austrittskanals (26) aufweisen.

10. Mischkopf nach einem der Ansprüche 4 bis 9, dadurch gekennzeichnet, daß die oder jede Wandplatte (29; 37, 38) des Drosselorgans (8) senkrecht zur Längsachse des Ausstoßkanals (26) und parallel zu der Rechteckseite (35, 36) des Kanalquerschnitts, an der sie in Drosselstellung gegenüber ihrer Spaltbegrenzungsfläche (33; 44, 45) anliegt, verschieblich im Gehäuse (2) abgestützt ist.

11. Mischkopf nach Anspruch 10, dadurch gekennzeichnet, daß die größte Breite der oder jeder Wandplatte (29; 37, 38) des Drosselorgans (8), gemessen quer zu ihrer Verschieberichtung (27), kleiner als die Länge der in Meßrichtung verlaufenden Rechteckseite (40, 41) des Kanalquerschnitts ist.

12. Mischkopf nach Anspruch 10 oder 11, dadurch gekennzeichnet, daß die oder jede Wandplatte (37, 38) eine keilförmige Querschnittsgrundgestalt aufweist.

13. Mischkopf nach einem der Ansprüche 4 bis 9, dadurch gekennzeichnet, daß die oder jede Wandplatte (48; 48') des Drosselorgans (8) am Gehäuse (2) um eine senkrecht zur Längsrichtung des Führungskanals (3) angeordnete Achse (49) schwenkbar abgestützt ist.

14. Mischkopf nach Anspruch 12, dadurch gekennzeichnet, daß die Breite der oder jeder Wandplatte (48; 48') des Drosselorgans (8), gemessen quer zu ihrer Verschwenkrichtung (51), gleich der Länge einer Rechteckseite (36) des Kanalquerschnitts ist.

15. Mischkopf nach Anspruch 13 oder 14, dadurch gekennzeichnet, daß die oder jede Wandplatte (48; 48') des Drosselorgans (8) in Verschwenkrichtung (51) um ein Maß in den Kanalquerschnitt einschwenkbar ist, das kleiner als die Länge der parallel zur Verschwenkrichtung (51) verlaufenden Rechteckseiten (55, 56) des Kanalquerschnitts ist.

16. Mischkopf nach einem der Ansprüche 13 bis 15, dadurch gekennzeichnet, daß die Einschwenktiefe der oder jeder Wandplatte (48; 48') des Drosselorgans (8) einstellbar ist.

17. Mischkopf nach einem der Ansprüche 13 bis 16, dadurch gekennzeichnet, daß der Abstand der Schwenkachse (49) der oder jeder Wandplatte (48; 48') des Drosselorgans (8) von der Mischkammer (5) zur Einstellung unterschiedlicher Diffusoröffnungswinkel veränderbar ist.

18. Mischkopf nach Anspruch 7, dadurch gekennzeichnet, daß die einander gegenüberliegenden Wandflächen (44', 45' ; 54') der beiden das Drosselorgan (8) bildenden Wandplatten (37', 38' ; 48") in ihrer Drosselstellung zwischen dem sich diffusorartig erweiternden Drosselspalt (43', 53") und der Mischkammer (5) eine Nachmischkammer (59 ; 59') bilden.

19. Mischkopf nach Anspruch 18, dadurch gekennzeichnet, daß die Mischkammer (5) und die Nachmischkammer (59 ; 59') durch einen Verbindungsspalt (60 ; 61) miteinander in Strömungsverbindung stehen.

20. Mischkopf nach Anspruch 18 oder 19, dadurch gekennzeichnet, daß die Nachmischkammer (59) durch eine Profilformung zumindest einer der einander gegenüberliegenden Wandfächen (44', 45') der beiden Wandplatten (37', 38') gebildet ist.

21. Mischkopf nach Anspruch 18 oder 19, dadurch gekennzeichnet, daß die beiden das Drosselorgan (8) bildenden Wandplatten (48") eine ungleiche Höhe in Längsrichtung des Führungskanals (3) aufweisen und daß die Nachmischkammer (59') von der diffusorspaltbildenden Stirnwand (54') der höheren Wandplatte (48") mit der gegenüberliegenden Kanalwand (62) des Führungskanals (3) in einem Bereich gebildet ist, in dem die höhere Wandplatte (48") die niedrigere Wandplatte (48") überragt.

## Claims

1. A mixing head for mixing at least two components which form a plastics material, consisting of a housing (2) with a guide channel (3) which receives a reciprocable ejecting piston (4) having the same cross-section and which is locally constructed in the form of a mixing chamber (5) with inlets (11, 12) for the components, which mixing chamber is bounded, in the retracted position of the ejecting piston, at one end by the free end face (6) of the latter and at the other end by a throttle member (8) which is supported, in the region between the mixing chamber and the outlet (9, 10) at the housing side for the component mixture, in the mixing-head housing for transverse movement in relation to the guide channel forming an ejection channel for the mixture in this region, characterised in that the guide channel (3) has a rectangular cross-section and at least one of the four sides of the free rectangular cross-section of the channel is occupied at least partially by the throttle member (8) which extends, in length, from the mixing chamber (5) substantially as far as the outlet (25) of the outlet channel (26) and which is movable backwards and forwards between a rectracted position freeing the cross-section of the channel and a throttling position engaging in the cross-section of the channel, and in that, in its throttling position, the throttle member (8) forms a throttle gap (28 ; 43 ; 53 ; 53') crossing the outlet channel (26) at the downstream end of the mixing chamber (5), which gap widens out like a diffuser towards the outlet (25).

2. A mixing head according to claim 1, characterised in that, in its throttling position, the throttle member (8) presents a wall face (22 ; 44, 45 ; 54) which partially defines the free cross-section of the channel and reduces this, parallel to one rectangle side (35, 36) of the cross-section of the channel, which wall face becomes narrower towards the outlet (25).

3. A mixing head according to claim 2, characterised in that the wall face (33) of the throttle member (8) which, in the throttling position, partially limits the cross-section of the channel, has a profiling (34) which locally interrupts its continuous narrowing towards the outlet (25).

4. A mixing head according to any one of the claims 1 to 3, characterised in that the throttle member (8) is formed by a wall plate (29) of the housing (2), of which the face (30) which is adjacent to the ejection channel (26) in the rectracted position freeing the cross-section of the channel is disposed in a common plane with the adjoining wall face (31) of the ejection channel (26) and completes the rectangular boundary of the cross-section of the ejection channel (26).

5. A mixing head according to any one of the claims 1 to 3, characterised in that the throttle member (8) is formed from wall plates (37, 38) which are associated with two opposite sides (35, 36) of the cross-section of the channel and of which the faces (39, 40) adjacent to the ejection channel (26) in the retracted position freeing the cross-section of the channel are disposed in a common plane with the adjoining wall face (40, 41) of the channel (26) and complete the rectangular boundary of the cross-section of the channel (26) at two opposite rectangle sides of the cross-section of the channel.

6. A mixing head according to any one of the claims 1 to 4, characterised in that the throttle gap (28 ; 53) widening out like a diffuser is formed by the wall face (33 ; 54) of the throttle member (8) occupying the cross-section of the channel along one side of the rectangle of the cross-section and the wall face (36) of the ejection channel (26) situated opposite this.

7. A mixing head according to any one of the claims 1 to 5, characterised in that the throttle gap (43 ; 53') widening out like a diffuser is bounded by opposite wall faces (44, 45 ; 54) of the two wall plates (37, 38 ; 48') forming the throttle member (8).

8. A mixing head according to any one of the claims 4 to 7, characterised in that the or each wall plate (29 ; 37, 38 ; 48 ; 48') of the throttle member (8) is guided in a receiving opening in the housing (2), which opening has the same cross-section.

9. A mixing head according to claim 5 or 7, characterised in that the two wall plates (37, 38 ; 48') of the throttle member (8) have a mirror-image cross-sectional arrangement at each side of a central longitudinal plane of symmetry (46 ; 58) of the outlet channel (26).

10. A mixing head according to any one of the claims 4 to 9, characterised in that the or each wall plate (29 ; 37, 38) of the throttle member (8) is supported in the housing (2) for displacement perpendicular to the longitudinal axis of the ejection channel (26) and parallel to the rectangle side (35, 36) of the cross-section of the channel against which it bears, opposite its gap boundary face (33 ; 44, 45) in the throttling position.

11. A mixing head according to claim 10, characterised in that the greatest width of the or of each wall plate (29 ; 37, 38) of the throttle member (8), measured transversely to its displacement direction (27), is less than the length of the rectangle side (40, 41), extending in the measuring direction, of the cross-section of the channel.

12. A mixing head according to claim 10 or 11, characterised in that the or each wall plate (37, 38) has a wedge-shaped basic cross-sectional shape.

13. A mixing head according to any one of the claims 4 to 9, characterised in that the or each wall plate (48 ; 48′) of the throttle member (8) is supported on the housing (2) for pivoting about a pin (49) disposed perpendicular to the longitudinal direction of the guide channel (3).

14. A mixing head according to claim 12, characterised in that the width of the or of each wall plate (48, 48′) of the throttle member (8), measured transversely to its pivoting direction (51), is equal to the length of a rectangle side (36) of the cross-section of the channel.

15. A mixing head according to claim 13 or 14, characterised in that the or each wall plate (48, 48′) of the throttle member (8) is pivotable, in the pivoting direction (51), into the cross-section of the channel by an amount which is less than the length of the rectangle sides (55, 56) of the cross-section of the channel, which sides extend parallel to the pivoting direction (51).

16. A mixing head according to any one of the claims 13 to 15, characterised in that the depth to which the or each wall plate (48 ; 48′) of the throttle member (8) can be swung in is adjustable.

17. A mixing head according to any one of the claims 13 to 16, characterised in that the distance of the pivot pin (49) of the or of each wall plate (48 ; 48′) of the throttle member (8) from the mixing chamber (5) is variable in order to set different diffuser opening angles.

18. A mixing head according to claim 7, characterised in that, in their throttling position, the opposite wall faces (44′, 45′ ; 54′) of the two wall plates (37′, 38′ ; 48″) forming the throttle member (8) form an additional mixing chamber (59, 59′) between the throttle gap (43′ ; 53″) widening out like a diffuser and the mixing chamber (5).

19. A mixing head according to claim 18, characterised in that the mixing chamber (5) and the additional mixing chamber (59 ; 59′) are in flow communication with one another through a connecting gap (60 ; 61).

20. A mixing head according to claim 18 or 19, characterised in that the additional mixing chamber (59) is formed by a profile shaping of at least one of the opposite wall faces (44′, 45′) of the two wall plates (37′, 38′).

21. A mixing head according to claim 18 or 19, characterised in that the two wall plates (48″) forming the throttle member (8) having an unequal height in the longitudinal direction of the guide channel (3) and in that the additional mixing chamber (59′) is formed by the front wall (54′), forming the diffuser gap, of the higher wall plate (48″) with the opposite channel wall (62) of the guide channel (3), in a region in which the higher wall plate (48″) projects above the lower wall plate (48″).

**Revendications**

1. Tête de mélange pour mélanger au moins deux composants formant une matière plastique, constituée d'un boîtier (2) qui présente un canal de guidage (3) recevant à va-et-vient un piston d'éjection (4) de section constante et formant, dans une zone, une chambre de mélange (5) avec des orifices d'entrée (11, 12) pour les composants qui, dans la position rétractée du piston d'éjection est délimitée, à une extrémité, par la face d'about libre (6) du piston et à l'autre extrémité, par un organe d'étranglement (8) qui, dans la zone située entre la chambre de mélange et l'orifice de sortie (25) du côté du boîtier pour le mélange de composants prend appui dans le boîtier de la tête de mélange, d'une manière transversalement mobile par rapport au canal de guidage qui, dans cette zone, forme un canal d'éjection pour le mélange, caractérisée en ce que le canal de guidage (3) présente une section rectangulaire et au moins un des quatre côtés du rectangle de la section de canal libre est formé au moins en partie par l'organe d'étranglement (8) qui, en longueur s'étend à partir de la chambre de mélange (5) en substance jusqu'à l'orifice de sortie (25) du canal de sortie (26) et est mobile dans un sens et dans l'autre entre une position rétractée, dégageant la section du canal, et une position d'étranglement engagée dans la section du canal, et l'organe d'étranglement (8) forme, dans sa position d'étranglement, à l'extrémité d'aval de la chambre de mélange (5), un interstice d'étranglement (28 ; 43 ; 53 ; 53′) disposé en travers du canal de sortie (26) et allant en s'élargissant à la manière d'un diffuseur vers l'orifice de sortie.

2. Tête de mélange suivant la revendication 1, caractérisée en ce que l'organe d'étranglement (8) présente, dans sa position d'étranglement, parallèlement à un côté de rectangle (35, 36) de la section du canal, une surface de paroi (33 ; 44, 45 ; 54) qui limite partiellement la section libre du canal et la réduit et qui va en diminuant vers l'orifice de sortie (25).

3. Tête de mélange suivant la revendication 2, caractérisée en ce que la surface de paroi (33) de l'organe d'étranglement (8) qui, dans la position d'étranglement, limite partiellement la section du canal présente un profil (34) qui interrompt localement sa forme allant en diminuant progressivement vers l'orifice de sortie (25).

4. Tête de mélange suivant l'une quelconque des revendications 1 à 3, caractérisée en ce que l'organe d'étranglement (8) est formé par une plaque de paroi (29) du boîtier (2) dont la face d'about (30) tournée vers le canal d'éjection (26), dans la position rétractée dégageant la section du canal, est disposée dans un plan commun avec celui de la surface de paroi adjacente (31) du canal d'éjection (26) et complète la délimitation rectangulaire en coupe du canal d'éjection (26).

5. Tête de mélange suivant l'une quelconque des revendications 1 à 3, caractérisée en ce que l'organe d'étranglement (8) est formé par deux plaques de paroi (37, 38) associées à deux côtés opposés (35, 36) de la section du canal, dont les faces d'about (39, 40) tournées vers le canal d'éjection (26), dans la position rétractée dégageant la section du canal, sont disposées dans un plan commun avec celui de la face de paroi adjacente (40, 41) du canal et complètent la délimitation rectangulaire de la section du canal (26) au niveau de deux côtés opposés du rectangle de la section du canal.

6. Tête de mélange suivant l'une quelconque des revendications 1 à 4, caractérisée en ce que l'interstice d'étranglement (28 ; 53) qui va en s'élargissant à la manière d'un diffuseur est formé par la surface de paroi (33 ; 54) de l'organe d'étranglement (8) occupant la section du canal le long d'un côté de son rectangle et par la surface de paroi (36) du canal d'éjection (26) opposée à la première.

7. Tête de mélange suivant l'une quelconque des revendications 1 à 5, caractérisée en ce que l'interstice d'étranglement (43 ; 53') qui va en s'élargissant à la façon d'un diffuseur est délimité par des surfaces de paroi opposées l'une à l'autre (44, 45 ; 54) des deux plaques de paroi (37, 38 ; 48') formant l'organe d'étranglement (8).

8. Tête de mélange suivant l'une quelconque des revendications 4 à 7, caractérisée en ce que la ou les plaques de paroi (29 ; 37, 38 ; 48, 48') de l'organe d'étranglement (8) est ou sont guidées dans une ouverture réceptrice de même section du boîtier (2).

9. Tête de mélange suivant la revendication 5 ou 7, caractérisée en ce que les deux plaques de paroi (37, 38 ; 48') de l'organe d'étranglement (8) présentent une disposition énantiomorphe en coupe de part et d'autre d'un plan longitudinal médian de symétrie (46 ; 58) du canal de sortie (26).

10. Tête de mélange suivant l'une quelconque des revendications 4 à 9, caractérisée en ce que la ou les plaques de paroi (29 ; 37, 38) de l'organe d'étranglement (8) est ou sont montées déplaçables dans le boîtier (2) perpendiculairement à l'axe longitudinal du canal d'éjection (26) et parallèlement au côté (35, 36) du rectangle de la section du canal contre lequel elle(s) s'applique(nt) dans la position d'étranglement par rapport à sa surface de délimitation de l'interstice (33 ; 44, 45).

11. Tête de mélange suivant la revendication 10, caractérisée en ce que la largeur maximum de la ou des plaques de paroi (29 ; 37, 38) de l'organe d'étranglement (8), mesurée transversalement à son sens de déplacement (27), est inférieure à la longueur du côté de rectangle (40, 41) de la section de canal qui s'étend dans la direction de mesure.

12. Tête de mélange suivant la revendication 10 ou 11, caractérisée en ce que la ou les plaques de paroi (37, 38) présente(nt) une configuration en coupe cunéiforme.

13. Tête de mélange suivant l'une quelconque des revendications 4 à 9, caractérisée en ce que la ou les plaques de paroi (48 ; 48') de l'organe d'étranglement (8) est ou sont montées sur le boîtier (2) de manière à pouvoir pivoter autour d'un axe (49) disposé perpendiculairement à la direction longitudinale du canal de guidage (3).

14. Tête de mélange suivant la revendication 12, caractérisée en ce que la largeur de la ou des plaques de paroi (48 ; 48') de l'organe d'étranglement (8), mesurée perpendiculairement à leur direction de pivotement (51), est égale à la longueur d'un côté de rectangle (36) de la section du canal.

15. Tête de mélange suivant la revendication 13 ou 14, caractérisée en ce que la ou les plaques de paroi (48 ; 48') de l'organe d'étranglement (8) peut ou peuvent pivoter dans la direction de pivotement (51) d'une distance qui est inférieure à la longueur des côtés de rectangle (55, 56) de la section du canal qui s'étendent parallèlement à la direction de pivotement (51).

16. Tête de mélange suivant l'une quelconque des revendications 13 à 15, caractérisée en ce que la profondeur de pivotement vers l'intérieur de la ou des plaques de paroi (48 ; 48') de l'organe d'étranglement (8) est réglable.

17. Tête de mélange suivant l'une quelconque des revendications 13 à 16, caractérisée en ce que l'espacement entre l'axe de pivotement (49) de la ou des plaques de paroi (48 ; 48') de l'organe d'étranglement (8) et la chambre de mélange (5) peut être modifié pour obtenir des angles d'ouverture de diffuseur différents.

18. Tête de mélange suivant la revendication 7, caractérisée en ce que les deux surfaces de paroi opposées (44', 45' ; 54') des deux plaques de paroi (37', 38' ; 48'') formant l'organe d'étranglement (8) forment, dans leur position d'étranglement, une chambre de postmélange (59 ; 59') entre l'interstice d'étranglement (43' ; 53'') qui va en s'élargissant à la manière d'un diffuseur et la chambre de mélange (5).

19. Tête de mélange suivant la revendication 18, caractérisée en ce que la chambre de mélange (5) et la chambre de postmélange (59 ; 59') sont en communication d'écoulement l'une avec l'autre par un interstice de raccordement (60 ; 61).

20. Tête de mélange suivant la revendication 18 ou 19, caractérisée en ce que la chambre de postmélange (59) est formée par un profilage au moins d'une des surfaces de paroi (44', 45') opposées l'une à l'autre des deux plaques de paroi (37', 38').

21. Tête de mélange suivant la revendication 18 ou 19, caractérisée en ce que les deux plaques de paroi (48") formant l'organe d'étranglement (8) présentent des hauteurs différentes dans le sens longitudinal du canal de guidage (3) et la chambre de postmélange (59') est formée par la paroi d'about (54') formant interstice diffuseur de la plaque de paroi (48") plus haute avec la paroi de canal opposée (62) du canal de guidage (3) dans une zone dans laquelle la plaque de paroi (48") plus haute dépasse la plaque de paroi (48") plus basse.

Fig. 1

Fig. 2

Fig. 3

Fig. 4

Fig.7

Fig.8

Fig.9

Fig.5

Fig.6

Fig.13

Fig.11

Fig.12

Fig.10

Fig. 14

Fig. 16

Fig. 15

Fig. 17

0 212 110

0 212 110

Fig. 18

Fig. 19